# EUROPEAN PATENT APPLICATION

(11) **EP 2 629 482 A2**
(43) Date of publication of application: **21.08.2013**
(21) Application number: 13151845.8
(22) Date of filing: 18.01.2013
(51) Int. Cl.: H04L 29/06, H04W 12/02

(54) **Lawful intercept without mobile station international subscriber directory number**

(30) Priority: 30.01.2012 US 201261592162 P
(71) Applicant: Nokia Siemens Networks Oy, 02610 Espoo (FI)
(72) Inventor: Ungvari, Gabor, 2360 Gyal (HU); Chandramouli, Devaki, Plano, TX Texas 75074 (US)

(57) **Abstract**

There are provided measures for lawful intercept without mobile station international subscriber directory number. Such measures exemplarily comprise a method and apparatus for activating lawful interception in a network for devices without MSISDN is provided. In particular, such measures exemplarily comprise receiving a first message comprising an external identifier, obtaining a subscriber identifier based on said external identifier, and activating lawful interception using said subscriber identifier.

## Description

### Field

Embodiments of the invention relate to wireless communications networks, such as the Universal Mobile Telecommunications System (UMTS) Terrestrial Radio Access Network (UTRAN) Long Term Evolution (LTE) and Evolved UTRAN (E-UTRAN).

### Background

Universal Mobile Telecommunications System (UMTS) Terrestrial Radio Access Network (UTRAN) refers to a communications network including base stations, or Node-Bs, and radio network controllers (RNC). UTRAN allows for connectivity between the user equipment (UE) and the core network. The RNC provides control functionalities for one or more Node Bs. The RNC and its corresponding Node-Bs are called the Radio Network Subsystem (RNS).

Long Term Evolution (LTE) refers to improvements of the UMTS through improved efficiency and services, lower costs, and use of new spectrum opportunities. In particular, LTE is a 3rd Generation Partnership Project (3GPP) standard that provides for uplink peak rates of at least 50 megabits per second (Mbps) and downlink peak rates of at least 100 Mbps. LTE supports scalable carrier bandwidths from 20 MHz down to 1.4 MHz and supports both Frequency Division Duplexing (FDD) and Time Division Duplexing (TDD).

As mentioned above, LTE improves spectral efficiency in communication networks, allowing carriers to provide more data and voice services over a given bandwidth. Therefore, LTE is designed to fulfill future needs for high-speed data and media transport in addition to high-capacity voice support. Advantages of LTE include high throughput, low latency, FDD and TDD support in the same platform, an improved end-user experience, and a simple architecture resulting in low operating costs. In addition, LTE is an all internet protocol (IP) based network, supporting both IPv4 and IPv6.

The Evolved 3GPP Packet Switched Domain, which is also known as the Evolved Packet System (EPS), provides IP connectivity using the E-UTRAN.

### Summary

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a method comprising receiving a first message comprising an external identifier, obtaining a subscriber identifier based on said external identifier, and activating lawful interception using said subscriber identifier.

According to an exemplary aspect of the present invention, there is provided a method comprising receiving a first message comprising an external identifier, and transmitting a second message comprising a subscriber identity based on said external identifier.

According to an exemplary aspect of the present invention, there is provided a method comprising mapping between a first identity and a second identity, wherein said first identity is one of an external identity and a subscriber identity, and said second identity is the other one out of said external identity and said subscriber identity.

According to an exemplary aspect of the present invention, there is provided an apparatus comprising at least one processor, and at least one memory including computer program code, wherein said at least one memory with the computer program code and the at least one processor being adapted to cause the apparatus to perform receiving a first message comprising an external identifier, obtaining a subscriber identifier based on said external identifier, and activating lawful interception using said subscriber identifier.

According to an exemplary aspect of the present invention, there is provided an apparatus comprising at least one processor, and at least one memory including computer program code, wherein said at least one memory with the computer program code and the at least one processor being adapted to cause the apparatus to perform receiving a first message comprising an external identifier, transmitting a second message comprising a subscriber identity based on said external identifier.

According to an exemplary aspect of the present invention, there is provided an apparatus comprising at least one processor, and at least one memory including computer program code, wherein said at least one memory with the computer program code and the at least one processor being adapted to cause the apparatus to perform mapping between a first identity and a second identity, wherein said first identity is one of an external identity and a subscriber identity, and said second identity is the other one out of said external identity and said subscriber identity.

According to an exemplary aspect of the present invention, there is provided an apparatus comprising receiving means for receiving a first message comprising an external identifier, obtaining means for obtaining a subscriber identifier based on said external identifier, and activating means for activating lawful interception using said subscriber identifier. According to an exemplary aspect of the present invention, there is provided an apparatus comprising receiving means for receiving a first message comprising an external identifier, and transmitting means for transmitting a second message comprising a subscriber identity based on said external identifier.

According to an exemplary aspect of the present invention, there is provided an apparatus comprising mapping means for mapping between a first identity and a second identity, wherein said first identity is one of an external identity and a subscriber identity, and said second identity is the other one out of said external identity and said subscriber identity.

According to an exemplary aspect of the present invention, there is provided a computer program product comprising computer-executable computer program code which, when the program is run on a computer (e.g. a computer of an apparatus according to any one of the aforementioned apparatus-related exemplary aspects of the present invention), is configured to cause the computer to carry out the method according to any one of the aforementioned method-related exemplary aspects of the present invention.

Such computer program product may comprise (or be embodied) a (tangible) computer-readable (storage) medium or the like on which the computer-executable computer program code is stored, and/or the program may be directly loadable into an internal memory of the computer or a processor thereof.

### Brief description of the drawings

For proper understanding of the invention, reference should be made to the accompanying drawings, wherein:
Fig. 1 illustrates a system according to one embodiment of the invention;
Fig. 2 illustrates a system according to another embodiment;
Fig. 3 illustrates a signaling diagram according to one embodiment;
Fig. 4 illustrates a signaling diagram according to another embodiment;
Fig. 5 illustrates a signaling diagram according to another embodiment; and
Fig. 6 illustrates an apparatus according to one embodiment.

### Detailed description of drawings and embodiments of the present invention

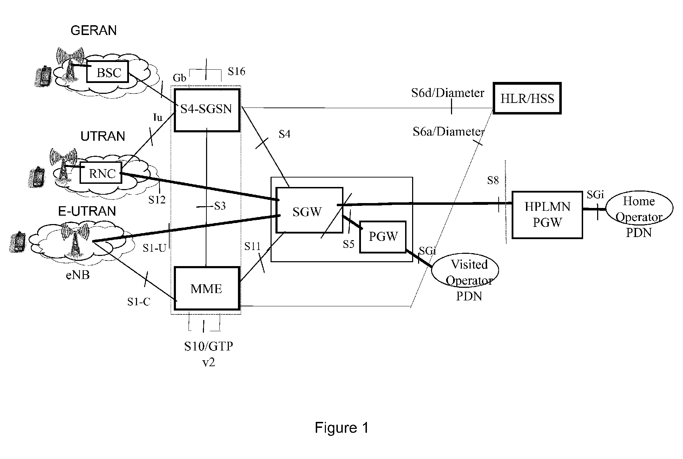

The evolved packet system (EPS) is the evolution of the general packet radio system (GPRS). EPS provides a new radio interface and new evolved packet core (EPC) network functions for broadband wireless data access. Fig. 1 illustrates an example of the EPS core network 100, according to an embodiment. As illustrated in Fig. 1, the EPS core network 100 may include the Mobility Management Entity (MME) 110, Packet Data Network Gateway (PGW) 125, and Serving Gateway (SGW) 120. MME 110 may be connected to SGW 120 via the S11 interface, and the SGW 120 in turn may be connected to PGW 125 via the S5 interface.

A common packet domain core network, such as EPS core network 100, can be used to provide core network functionality to the base station controller (BSC) 103 of the GSM/Edge radio access network (GERAN), the radio network controller (RNC) 102 of the UTRAN, and the eNB 101 of the E-UTRAN.

MME 110 may be considered the main control node for the core network 100. Some features handled by MME 110 include: bearer activation/de-activation, idle mode UE tracking, choice of SGW for a UE 104, intra-LTE handover involving core network node location, interacting with the home location register (HLR) / home subscriber server (HSS) 130 to authenticate user on attachment, and providing temporary identities for UEs 104.

HLR/HSS 130 is a central database that contains user-related and subscription-related information. Functions of the HLR/HSS 130 may include mobility management, call and session establishment support, user authentication and access authorization.

SGW 120 is a data plane element within the core network 100. SGW 120 manages user plane mobility and acts as the main interface between the radio access network(s) and the core network. SGW 120 can also maintain the data path between the eNBs 101 and PGW 125. As a result, SGW 120 may form an interface for the data packet network at the E-UTRAN. SGW 120 may also be in communication with home public land mobile network (HPLMN) gateway 135 which may store the home user's 140 subscription data. PGW 125 provides connectivity for the UE to external packet data networks (PDNs). A UE 104 may have connectivity with more than one PGW 125 for accessing multiple PDNs 150.

A serving GPRS support node (SGSN) 105 may be provided in the core network 100 to transfer information to and from the GERAN and UTRAN via an lu interface, for example. SGSN 105 may communicate with SGW 120 via the S4 interface. SGSN 105 may store location information for a UE, such as current cell, and may also store user profiles, such as international mobile subscriber identity (IMSI).

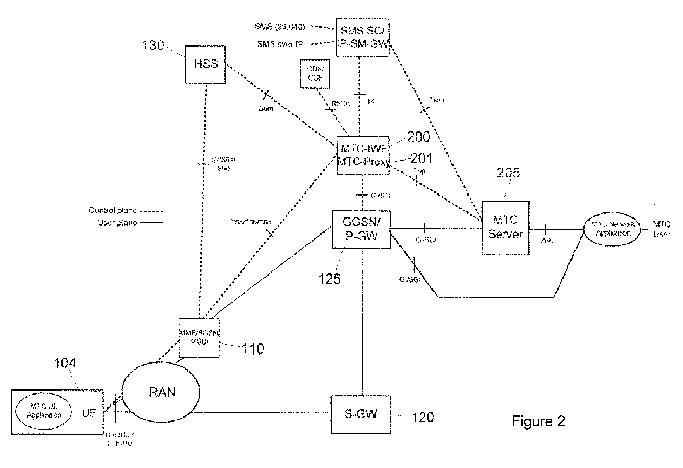

Fig. 2 illustrates an example of a machine-type communication (MTC) architecture, according to an embodiment. For MTC, a new functional entity called machine-type communication interworking function (MTC-IWF) 200 and some new interfaces, such as S6m, Tsp, Tsms, T5a/b/c and T4, are introduced to the 3GPP architecture as shown in Fig. 2. One purpose of the MTC-IWF 200 and the new interfaces in 3GPP release 11 is to enable triggering of devices, for instance in order to establish a packet data network (PDN) connection / packet data protocol (PDP) context, with or without a mobile station international subscriber directory number (MSISDN) from an internal or external MTC Server 205.

The amount of MTC Devices is expected to become two orders of magnitude higher than the amount of devices for human to human communication scenarios. This has to be taken into account with respect to the international mobile subscriber identity (IMSI), international mobile equipment identity (IMEI) and MSISDN, as regulatory bodies indicate future shortages of MSISDNs. As a result, the packet switched (PS) only MTC Feature in 3GPP TS 22.368 includes a requirement that PS only subscriptions are possible without an MSISDN.

Therefore, MSISDN-less operation, such as device triggering without MSISDN, is one of the MTC related features to be included in 3GPP release 11 (see 3GPP TS 23.682 and TR 23.888). For MSISDN-less device triggering, a new external identifier is defined in 3GPP TS 23.682 and TR 23.888. This external identifier can be, for instance, a fully qualified domain name (FQDN) or a network access identifier (NAI). This MSISDN-less operation may create an issue with respect to lawful interception.

Lawful interception (LI) refers to the legally authorized process by which a communications service provider (CSP) is required to give access to the communication of private individuals or organization to law enforcement, i.e., the intercepting authority. This interception process is strongly regulated by national laws and telecom acts in each country /region. Communication networks have well defined interfaces to provide the intercepted communication and the interception related information towards the intercepting authority. The CSP receives the interception target subscriber identifiers from the authorities with an interception warrant. The warrant details are provisioned in the network LI administration function that further distribute the required target and warrant related information to the network elements providing interception functions. Depending on the actual network technology and domain, the interception target identifier in the network elements can be IMSI, MSISDN, IMEI, session initiation protocol (SIP) uniform resource identifier (URI), TEL URI or NAI, for example.

As mentioned above, since there is a shortage of MSISDNs for MTC terminals, MSISDN has to be replaced by another external identifier (e.g., FQDN, URI, URN). Within the core network, IMSI will be used as the internal identifier. Outside the service provider network the MTC terminal would be identified with an external identifier. When authorities want to intercept the communication of the MTC terminal, they may have only the external identifier available for the interception warrant. The interception functions (LEA) in the network requires an identifier to activate and invoke interception in the network elements. The external identifier is available only in the HSS and may be in the MTC-IWF. The network elements (e.g. MME, SGSN, P-GW) where the interception can be triggered has access only to the internal identifier, that is, the IMSI. Exposing the internal identifier to all the network elements and internal interfaces just for the purpose of lawful intercept does not seem warranted. Hence, a solution is needed for LI warrants with external identifier in order to activate interception in the network elements for MSISDN-less subscription.

Accordingly, embodiments of the invention provide a solution for lawful intercept for devices without MSISDN. Embodiments resolve the external identity of the MTC device to a network internal identifier and use this resolved internal identifier for LI activation in the network, as will be discussed in more detail below.

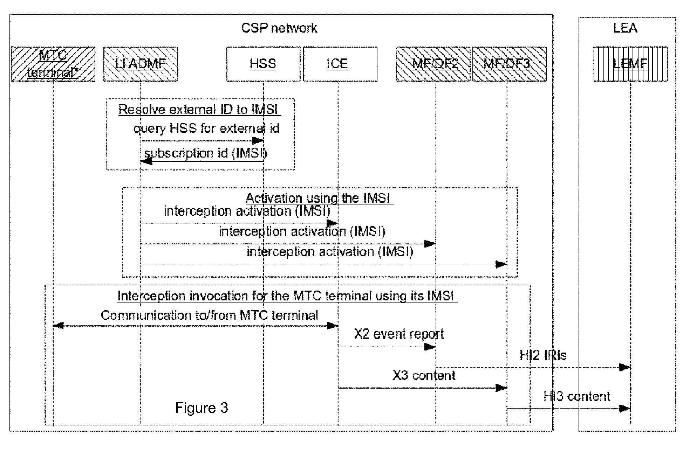

Fig. 3 illustrates one embodiment of a signalling diagram for lawful interception activation. In this embodiment, the LI administration function (LI ADMF) uses the external identifier for the LI warrant trigger received from the authorities and resolves it to IMSI to activate interception within the network elements (MME, SGSN, PDN-GW, S-GW, GGSN). More specifically, for MSISDN-less subscription, LI ADMF receives the LI warrant with the external identifier. LI ADMF queries the HSS for the IMSI that is associated with the subscription identified by the external identifier received in the LI warrant. LI ADMF stores the mapping of the external identifier to the IMSI and activates interception in the network using the IMSI. When the corresponding MTC terminal related events and communications are triggered, the network performs lawful interception and provides the result of the interception towards the mediation functions (MF/DF2 and MF/DF3). The mediation function(s) adds the IMSI to external identifier mapping then forwards the interception result towards the interception authority identifying the user by the external identifier. This embodiment provides several advantages including, but not limited to, providing a solution for lawful intercept without having to expose the external identifier in the packet core network elements (MME, SGSN, GGSN, P-GW, S-GW) and thereby reducing the impact on GTP signalling.

Accordingly, one embodiment is directed to a method of activation of lawful interception in a network for devices without MSISDN. The method includes receiving, at a LI ADMF, a LI warrant including an external identifier of a MTC terminal or subscription in the network. The method may then include LI ADMF querying a HSS for a IMSI that is associated with the subscription identified by the external identifier received in the LI warrant. The method further includes storing, by the LI ADMF, a mapping of the external identifier to the IMSI and activating interception in the network using the IMSI. The method may further include performing lawful interception, by the intercepting control element (e.g., SGSN, GGSN, ME, SGW, PDN-GW, HSS), when the events and communications are triggered by the corresponding device. The method can also include providing, by the intercepting control element (ICE), a result of the interception to at least one mediation function. The method may further include adding, by the mediation function, the mapping of the external identifier to the IMSI to the result of the interception. The method may then include forwarding, by the mediation function, the result to the interception authority. The result forwarded to the interception authority may identify the MTC terminal by the external identifier.

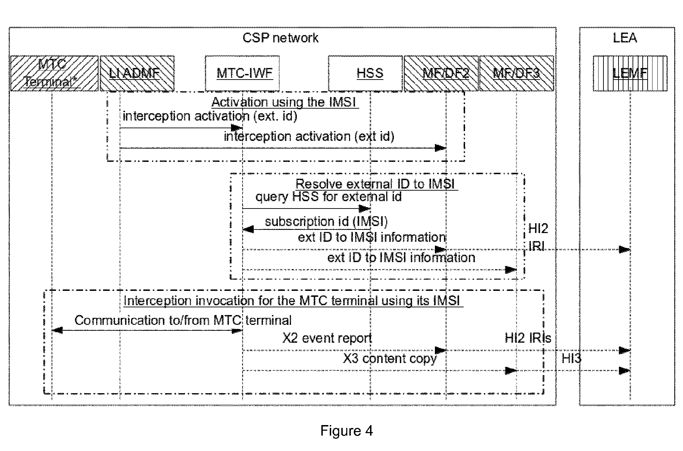

Fig. 4 illustrates another embodiment of a signalling diagram for lawful interception activation. In this embodiment, the LI ADMF uses the external identifier for the LI warrant trigger received from authorities and uses the same to activate interception within the MTC-IWF. The MTC-IWF then provides the intercepted communication and interception related event reports towards the mediation function. In this embodiment, the MTC-IWF is handling both signalling and user plane traffic of the MTC terminals. According to this embodiment, for MSISDN-less subscription, LI ADMF activates interception in the MTC-IWF using the external identifier. The network provides the IMSI mapping of the external identifier towards the LEA. When the corresponding MTC terminal related events and communications are triggered, network performs lawful interception and forwards the intercept related information (IRI) and communication content to the MF/DF2 and MF/DF3.

The network informs the related communication and events to LEA for the corresponding external identifier. The mediation function then forwards the interception result towards the intercepting authority identifying the user by the external identifier. Some benefits of this embodiment include, but are not limited to, providing a solution for lawful intercept without having to expose the external identifier in the packet core network elements (MME, SGSN, GGSN, P-GW, S-GW) and thereby reduces the impact on GTP signalling, and reducing the number of nodes involved in intercepting events and communication due to device triggering, small data transmission, monitoring, etc. since the MTC-IWF will always be in the path.

Thus, another embodiment is directed to an alternative method of activation of lawful interception in a network for devices without MSISDN. The method includes receiving, at a LI ADMF, a LI warrant including an external identifier of a MTC terminal or subscription in the network. The method may then include activating interception in the MTC-IWF using the external identifier. According to this method, the MTC-IWF may then query a HSS for a IMSI that is associated with the subscription identified by the external identifier received in the LI warrant. The method also includes storing, by the MTC-IWF, a mapping of the external identifier to the IMSI and forwarding the mapping to at least one mediation function. The method further includes performing lawful interception, by the MTC-IWF, when the events and communications are triggered by the corresponding device. The method also includes forwarding, by the MTC-IWF, the intercept related information (IRI) and communication content for the MTC terminal to the mediation function(s). The mediation function(s) may then forward the IRI and communication content to the interception authority identifying the MTC terminal by the its external identifier.

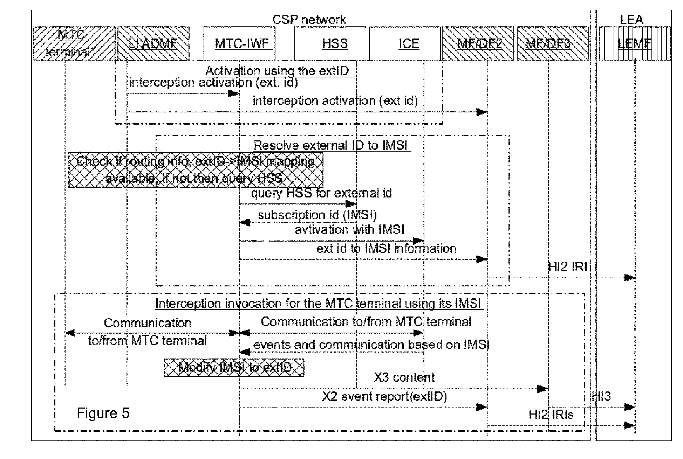

Fig. 5 illustrates another embodiment of a signalling diagram for lawful interception activation. In this embodiment, the LI ADMF uses the external identifier for the LI warrant trigger received from authorities and uses the same to activate interception within the network. The embodiment illustrated in Fig. 5 is similar to that of Fig. 3, but here the MTC-IWF makes the interception activation/deactivation after it makes the external ID to IMSI conversion. In this embodiment, for MSISDN-less subscription, LI ADMF activates interception in the MTC-IWF using the external identifier. If MTC-IWF has a cached copy of the external identifier to IMSI mapping and serving node, it uses the IMSI to forward the intercept request to the corresponding serving node. If not, MTC-IWF queries the HSS for the IMSI and serving node identifier and forwards the intercept request to the corresponding serving node. When the corresponding MTC terminal related events and communications are triggered, the network performs lawful interception. The network informs the related communication and events to the MTC-IWF for the corresponding IMSI. The MTC-IWF maps the IMSI to the external identifier and forwards the communication and events to the LI mediation function(s) (MF/DF2 and MF/DF3). The LI mediation function(s) then forwards it towards the LEA for the corresponding external identifier.

Therefore, another embodiment is directed to a further alternative method of activation of lawful interception in a network for devices without MSISDN. The method includes receiving, at a MTC-IWF, an external identifier from a LI ADMF. The external identifier may have been received in a LI warrant from an interception authority. The method also includes determining, by the MTC-IWF, whether a cached copy of a mapping of the received external identifier to its associated IMSI is available and whether a serving node identifier of the serving node of the device associated with the external identifier is available. If the cached copy of the mapping and the serving node identifier are not available, then the method includes querying and receiving the IMSI and serving node information from the HSS, and forwarding an intercept request with the mapping to the serving node. If the cached copy of the mapping and the serving node are available, then the MTC-IWF can forward the intercept request with the mapping to the serving node without first querying the HSS. The serving node may perform the lawful interception when the corresponding MTC terminal related events and communications are triggered. The method then further includes receiving, at the MTC-IWF, the IRI and communication content for the IMSI included in the intercept request from the serving node. The method may also include mapping, by the MTC-IWF, the IMSI to the external identifier and forwarding the IRI and the communication content to the mediation function(s).

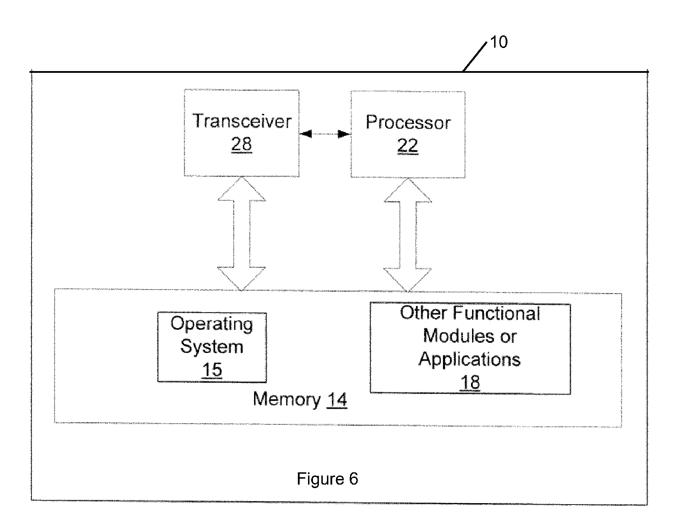

Fig. 6 illustrates an apparatus 10 according to one embodiment. In an embodiment, apparatus 10 may be the LI ADMF or MTC-IWF illustrated in Figs. 3-5. Apparatus 10 includes a processor 22 for processing information and executing instructions or operations. Processor 22 may be any type of general or specific purpose processor. While a single processor 22 is shown in Fig. 3, multiple processors may be utilized according to other embodiments. In fact, processor 22 may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as examples.

Apparatus 10 further includes a memory 14, coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory ("RAM"), read only memory ("ROM"), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

Apparatus 10 may also include one or more antennas (not shown) for transmitting and receiving signals and/or data to and from apparatus 10. Apparatus 10 may further include a transceiver 28 that modulates information on to a carrier waveform for transmission by the antenna(s) and demodulates information received via the antenna(s) for further processing by other elements of apparatus 10. In other embodiments, transceiver 28 may be capable or transmitting and receiving signals or data directly. According to an embodiment, the transceiver 28 is capable of supporting dual radio operation.

Processor 22 may perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 stores software modules that provide functionality when executed by processor 22. The modules may include an operating system 15 that provides operating system functionality for apparatus 10. The memory may also store one or more functional modules 18, such as an application or program, to provide additional functionality for apparatus 10. The components of apparatus 10 may be implemented in hardware, or as any suitable combination of hardware and software.

According to one embodiment, apparatus 10 may be the LI ADMF illustrated in Figs. 3-5. In this embodiment, memory 14 and the computer program code stored thereon may be configured, with processor 22, to cause the apparatus 10 to receive a LI warrant including an external identifier for a MTC terminal or subscription in the network. Apparatus 10 is then controlled to query a HSS serving the MTC terminal or subscription for the IMSI that is associated with the subscription identified by the external identifier received in the LI warrant. Apparatus 10 may then store a mapping of the external identifier to the IMSI and activate lawful interception in the network using the IMSI.

In another embodiment, apparatus 10 may be the MTC-IWF illustrated in Figs. 3-5. In this embodiment, memory 14 and the computer program code stored thereon may be configured, with processor 22, to cause the apparatus 10 to receive an external identifier from a LI ADMF, for example. The external identifier may have been included in a LI warrant. Apparatus 10 may then be controlled to query a HSS for a IMSI that is associated with the subscription identified by the external identifier. Apparatus 10 may also be controlled to store a mapping of the external identifier to the IMSI and forward the mapping to at least one mediation function. Apparatus 10 may then be controlled to perform lawful interception when the events and communications are triggered by the corresponding device, and to forward the intercept related information (IRI) and communication content for the MTC terminal to the mediation function(s) to provide to the interception authority.

According to another embodiment, memory 14 and the computer program code stored thereon may be configured, with processor 22, to cause the apparatus 10 to receive an external identifier from a LI ADMF. The external identifier may have been received in a LI warrant from an interception authority. Apparatus 10 may then be controlled to determine whether a cached copy of a mapping of the received external identifier to its associated IMSI is stored in the memory and whether a serving node identifier of the serving node of the device associated with the external identifier is available. If the cached copy of the mapping and the serving node identifier are not available, then apparatus 10 is controlled to query and receive the IMSI and serving node information from the HSS, and forward an intercept request with the mapping to the serving node. If the cached copy of the mapping and the serving node are available, then apparatus 10 can be controlled to forward the intercept request with the mapping to the serving node without first querying the HSS. The serving node may perform the lawful interception when the corresponding MTC terminal related events and communications are triggered. Apparatus 10 may then be controlled to receive the IRI and communication content for the IMSI included in the intercept request from the serving node. Apparatus 10 may also be controlled to map the IMSI to the external identifier and forwarding the IRI and the communication content to the mediation function(s).

In some embodiments, the functionality of the methods described herein, may be implemented by a software stored in memory or other computer readable or tangible media, and executed by a processor. In other embodiments, the functionality may be performed by hardware, for example through the use of an application specific integrated circuit (ASIC), a programmable gate array (PGA), a field programmable gate array (FPGA), or any other combination of hardware and software.

The computer readable media mentioned above may be at least partially embodied by a transmission line, a compact disk, digital-video disk, a magnetic disk, holographic disk or tape, flash memory, magnetoresistive memory, integrated circuits, or any other digital processing apparatus memory device.

One embodiment is directed to a method for activating lawful interception in a network for devices without MSISDN. The method includes receiving a LI warrant including an external identifier of a MTC terminal or subscription in the network. The method may then include querying a HSS for a IMSI that is associated with the subscription identified by the external identifier received in the LI warrant. The method further includes storing a mapping of the external identifier to the IMSI and activating interception in the network using the IMSI.

Another embodiment is directed to a method for activating lawful interception in a network for devices without MSISDN. The method includes receiving an external identifier of a terminal for which a LI warrant has been issued. The method may then include querying a HSS for a IMSI that is associated with the subscription identified by the external identifier. The method also includes storing a mapping of the external identifier to the IMSI and forwarding the mapping to at least one mediation function. The method further includes performing lawful interception, when the events and communications are triggered by the corresponding device, to produce intercept related information (IRI) and communication content for the identified terminal/subscription. The method also includes forwarding the IRI and communication content for the MTC terminal to the at least one mediation function.

Another embodiment is directed to a method for activating lawful interception in a network for devices without MSISDN. The method includes receiving an external identifier from a LI ADMF. The external identifier may have been received in a LI warrant from an interception authority. The method also includes determining whether a cached copy of a mapping of the received external identifier to its associated IMSI is available and whether a serving node identifier of the serving node of the device associated with the external identifier is available. If the cached copy of the mapping and the serving node identifier are not available, then the method includes querying and receiving the IMSI and serving node information from the HSS, and forwarding an intercept request with the mapping to the serving node. If the cached copy of the mapping and the serving node are available, then the method includes forwarding the intercept request with the mapping to the serving node without first querying the HSS. The method may further include receiving the IRI and communication content for the IMSI included in the intercept request from the serving node. The method may also include mapping the IMSI to the external identifier and forwarding the IRI and the communication content to the mediation function(s).

Another embodiment is directed to an apparatus including at least one processor and at least one memory including computer program code. The at least one memory and the computer program code is configured, with the at least one processor to cause the apparatus at least to receive a LI warrant including an external identifier of a MTC terminal or subscription in the network. The at least one memory and the computer program code may be further configured, with the at least one processor to cause the apparatus at least to query a HSS for a IMSI that is associated with the subscription identified by the external identifier received in the LI warrant. The at least one memory and the computer program code may be further configured, with the at least one processor to cause the apparatus at least to store a mapping of the external identifier to the IMSI and activating interception in the network using the IMSI.

Another embodiment is directed to an apparatus including at least one processor and at least one memory including computer program code. The at least one memory and the computer program code is configured, with the at least one processor to cause the apparatus at least to receive an external identifier of a terminal for which a LI warrant has been issued, and to query a HSS for a IMSI that is associated with the subscription identified by the external identifier. The at least one memory and the computer program code may be further configured, with the at least one processor to cause the apparatus at least to store a mapping of the external identifier to the IMSI and forwarding the mapping to at least one mediation function. The at least one memory and the computer program code may be further configured, with the at least one processor to cause the apparatus at least to perform lawful interception, when the events and communications are triggered by the corresponding device, to produce intercept related information (IRI) and communication content for the identified terminal/subscription. The at least one memory and the computer program code may be further configured, with the at least one processor to cause the apparatus at least to forward the IRI and communication content for the MTC terminal to the at least one mediation function.

Another embodiment is directed to an apparatus including at least one processor and at least one memory including computer program code. The at least one memory and the computer program code is configured, with the at least one processor to cause the apparatus at least to receive an external identifier, which may have been received in a LI warrant from an interception authority. The at least one memory and the computer program code may be further configured, with the at least one processor to cause the apparatus at least to determine whether a cached copy of a mapping of the received external identifier to its associated IMSI is available and whether a serving node identifier of the serving node of the device associated with the external identifier is available. If the cached copy of the mapping and the serving node identifier are not available, then the at least one memory and the computer program code may be further configured, with the at least one processor to cause the apparatus at least to query and receive the IMSI and serving node information from the HSS, and to forward an intercept request with the mapping to the serving node. If the cached copy of the mapping and the serving node are available, then the at least one memory and the computer program code may be further configured, with the at least one processor to cause the apparatus at least to forward the intercept request with the mapping to the serving node without first querying the HSS. The at least one memory and the computer program code may be further configured, with the at least one processor to cause the apparatus at least to receive the IRI and communication content for the IMSI included in the intercept request from the serving node, and to map the IMSI to the external identifier and forwarding the IRI and the communication content to the mediation function(s).

There are provided measures for lawful intercept for devices without mobile station international subscriber directory number. Such measures exemplarily comprise a method and apparatus for activating lawful interception in a network for devices without MSISDN is provided. In particular, such measures exemplarily comprise receiving a first message comprising an external identifier, obtaining a subscriber identifier based on said external identifier, and activating lawful interception using said subscriber identifier.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. Further, embodiments may be combined, performed in combination or implemented together.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

List of acronyms and abbreviations
- 3GPP: 3rd Generation Partnership Project
- ASIC: application specific integrated circuit
- BSC: base station controller
- CSP: communications service provider
- DSP: digital signal processor
- EPC: evolved packet core
- EPS: evolved packet system
- E-UTRAN: evolved UTRAN
- FPGA: field programmable gate array
- FDD: frequency division duplexing
- FQDN: fully qualified domain name
- GPRS: general packet radio system
- GERAN: GSM/Edge radio access network
- HLR: home location register
- HPLMN: home public land mobile network
- HSS: home subscriber server
- ICE: intercepting control element
- IRI: intercept related information
- IMEI: international mobile equipment identity
- IMSI: international mobile subscriber identity
- IP: internet protocol
- LI: lawful interception
- LI ADMF: lawful interception administration function
- LTE: Long Term Evolution
- MTC: machine-type communication
- MTC-IWF: machine-type communication interworking function
- MF: mediation function
- Mbps: megabits per second
- MSISDN: mobile station international subscriber directory number
- MME: mobility management entity
- NAI: network access identifier
- PDN: packet data network
- PGW: packet data network gateway
- PDP: packet data protocol
- PS: packet switched
- PGA: programmable gate array
- RNC: radio network controllers
- RNS: radio network subsystem
- RAM: random access memory
- ROM: read only memory
- SGW: serving gateway
- SGSN: serving GPRS support node
- SIP: session initiation protocol
- TDD: time division duplexing
- UE: user equipment
- UMTS: Universal Mobile Telecommunications System
- URI: uniform resource identifier
- UTRAN: UMTS terrestrial radio access network

## Claims

1. A method comprising
receiving a first message comprising an external identifier,
obtaining a subscriber identifier based on said external identifier, and
activating lawful interception using said subscriber identifier.

2. The method according to claim 1, wherein
in relation to said obtaining, said method further comprises
transmitting a query for said subscriber identifier, wherein said query comprises at least said external identifier,
receiving said subscriber identifier, and
storing a mapping of said external identifier to said subscriber identifier.

3. The method according to claim 2, wherein
in relation to said activating, said method further comprises
transmitting an interception activation message comprising at least said subscriber identifier.

4. The method according to claim 2, wherein
in relation to said activating, said method further comprises
transmitting said mapping of said external identifier to said subscriber identifier,
and
monitoring network traffic for communication related to said subscriber identifier.

5. The method according to claim 4, wherein
in relation to said activating, said method further comprises
producing intercept related information and communication content from communication related to said subscriber identifier, and
transmitting said intercept related information and said communication content.

6. The method according to claim 1, wherein
in relation to said obtaining, said method further comprises
determining whether a mapping of said external identifier to said subscriber identifier is available, and
if it is determined that said mapping of said external identifier to said subscriber identifier is not available
transmitting a query for said subscriber identifier, wherein said query comprises at least said external identifier,
receiving said subscriber identifier, and
storing a mapping of said external identifier to said subscriber identifier.

7. The method according to claim 6, wherein
in relation to said determining, it is determined whether a mapping of said external identifier to said subscriber identifier and a serving node identifier of a serving node serving a device associated with said external identifier is available,
wherein
if it is determined that said mapping of said external identifier to said subscriber identifier and/or said serving node identifier of said serving node serving said device associated with said external identifier is not available
a query for said subscriber identifier and serving node information is transmitted, wherein said query comprises at least said external identifier,
said subscriber identifier and serving node information including said serving node identifier is received, and
a mapping of said external identifier to said subscriber identifier and said serving node information are stored.

8. The method according to claim 7, wherein
in relation to said activating, said method further comprises
transmitting an interception activation message comprising at least said subscriber identifier and said mapping of said external identifier to said subscriber identifier using said serving node identifier.

9. The method according to claim 8, further comprising
receiving said intercept related information and communication content from communication related to said subscriber identifier, wherein said intercept related information and said communication content comprise at least said subscriber identifier,
mapping said subscriber identifier to said external identifier, and
transmitting said intercept related information and communication content, wherein said intercept related information and said communication content comprise at least said external identifier.

10. A method comprising
receiving a first message comprising an external identifier,
transmitting a second message comprising a subscriber identity based on said external identifier.

11. A method comprising
mapping between a first identity and a second identity, wherein
said first identity is one of an external identity and a subscriber identity, and said second identity is the other one out of said external identity and said subscriber identity.

12. The method according to any of claims 1 to 11, wherein
said subscriber identity is an International Mobile Subscriber Identity.

13. An apparatus comprising
at least one processor, and
at least one memory including computer program code, wherein
said at least one memory with the computer program code and the at least one processor being adapted to cause the apparatus to perform
receiving a first message comprising an external identifier,
obtaining a subscriber identifier based on said external identifier, and activating lawful interception using said subscriber identifier.

14. The apparatus according to claim 13, wherein
in relation to said obtaining, said at least one memory with the computer program code and the at least one processor being adapted to cause the apparatus to perform
transmitting a query for said subscriber identifier, wherein said query comprises at least said external identifier,
receiving said subscriber identifier, and
storing a mapping of said external identifier to said subscriber identifier.

15. The apparatus according to claim 14, wherein
in relation to said activating, said at least one memory with the computer program code and the at least one processor being adapted to cause the apparatus to perform
transmitting an interception activation message comprising at least said subscriber identifier.

16. The apparatus according to claim 14, wherein
in relation to said activating, said at least one memory with the computer program code and the at least one processor being adapted to cause the apparatus to perform
transmitting said mapping of said external identifier to said subscriber identifier, and
monitoring network traffic for communication related to said subscriber identifier.

17. The apparatus according to claim 16, wherein
in relation to said activating, said at least one memory with the computer program code and the at least one processor being adapted to cause the apparatus to perform
producing intercept related information and communication content from communication related to said subscriber identifier, and
transmitting said intercept related information and said communication content.

18. The apparatus according to claim 13, wherein
in relation to said obtaining, said at least one memory with the computer program code and the at least one processor being adapted to cause the apparatus to perform
determining whether a mapping of said external identifier to said subscriber identifier is available, and
if it is determined that said mapping of said external identifier to said subscriber identifier is not available
transmitting a query for said subscriber identifier, wherein said query comprises at least said external identifier,
receiving said subscriber identifier, and
storing a mapping of said external identifier to said subscriber identifier.

19. The apparatus according to claim 18, wherein
in relation to said determining, it is determined whether a mapping of said external identifier to said subscriber identifier and a serving node identifier of a serving node serving a device associated with said external identifier is available,
wherein
if it is determined that said mapping of said external identifier to said subscriber identifier and/or said serving node identifier of said serving node serving said device associated with said external identifier is not available
a query for said subscriber identifier and serving node information is transmitted, wherein said query comprises at least said external identifier,
said subscriber identifier and serving node information including said serving node identifier is received, and
a mapping of said external identifier to said subscriber identifier and said serving node information are stored.

20. The apparatus according to claim 19, wherein
in relation to said activating, said at least one memory with the computer program code and the at least one processor being adapted to cause the apparatus to perform
transmitting an interception activation message comprising at least said subscriber identifier and said mapping of said external identifier to said subscriber identifier using said serving node identifier.

21. The apparatus according to claim 20, wherein
said at least one memory with the computer program code and the at least one processor further being adapted to cause the apparatus to perform
receiving said intercept related information and communication content from communication related to said subscriber identifier, wherein said intercept related information and said communication content comprise at least said subscriber identifier,
mapping said subscriber identifier to said external identifier, and
transmitting said intercept related information and communication content, wherein said intercept related information and said communication content comprise at least said external identifier.

22. An apparatus comprising
at least one processor, and
at least one memory including computer program code, wherein
said at least one memory with the computer program code and the at least one processor being adapted to cause the apparatus to perform
receiving a first message comprising an external identifier,
transmitting a second message comprising a subscriber identity based on said external identifier.

23. An apparatus comprising
at least one processor, and
at least one memory including computer program code, wherein
said at least one memory with the computer program code and the at least one processor being adapted to cause the apparatus to perform
mapping between a first identity and a second identity, wherein
said first identity is one of an external identity and a subscriber identity, and
said second identity is the other one out of said external identity and said subscriber identity.

24. The apparatus according to any of claims 12 to 23, wherein
said subscriber identity is an International Mobile Subscriber Identity.

25. A computer program product comprising computer-executable computer program code which, when the program is run on a computer, is configured to cause the computer to carry out the method according to any one of claims 1 to 12.

26. The computer program product according to claim 25, wherein the computer program product comprises a computer-readable medium on which the computer-executable computer program code is stored, and/or wherein the program is directly loadable into an internal memory of the processor.
